# EUROPEAN PATENT SPECIFICATION

(11) **EP 3 078 305 B1**
(45) Date of publication and mention of the grant of the patent: **08.05.2019**
(21) Application number: 14824564.0
(22) Date of filing: 02.12.2014
(51) Int. Cl.: A47J 31/00

(54) **COMPACT BEVERAGE PREPARATION MACHINE AND SYSTEM OF SUCH MACHINES**
KOMPAKTE GETRÄNKEHERSTELLUNGSMASCHINE UND SYSTEM MIT SOLCHEN MASCHINEN
MACHINE DE PRÉPARATION DE BOISSONS COMPACTE ET SYSTÈME DESDITES MACHINES

(30) Priority: 02.12.2013 PT 10733113
(43) Date of publication of application: 12.10.2016
(73) Proprietor: Novadelta-Comércio e Industria de Cafés, Lda., 1950-041 Lisboa (PT)
(72) Inventor: NABEIRO, Rui Miguel, P-7370-112 Campo Maior (PT)
(74) Representative: Ferreira Pinto, Francisca
(86) International application number: PCT/PT2014/000072
(87) International publication number: WO 2015/084203

(56) References cited:
- EP-A1- 1 949 827
- WO-A1-2013/160278
- FR-A1- 2 653 649

## Description

### Field of the invention

The present invention refers to the field of the machines for preparing beverages, notably based upon the infusion of aromatic substances such as for example espresso type coffee, tea and similar. The present invention refers in particular to machines of this type with particularly compact construction format and dimensions.

The present invention further refers to a system of said compact machines for preparing beverages.

### Background of the invention

The prior art includes many solutions relating to machines for preparing beverages from aromatic substances provided in individual portion packages. This type of machines usually includes a set of functional components such as a fluid connection means, usually in the form of a water reservoir, fluid heating means, usually a boiler or thermo-block for heating water up to temperatures in the order of 90°C, fluid compression, usually a pump for more than 10 bar, an extraction device configured specifically for the portion packages being used. This set of functional components is, on the one hand, necessary for obtaining a good quality of, for example, espresso type coffee, from portion packages. This set of functional components is thus arranged in a given relative disposition by means of combination with a set of structural parts, including at least a machine envelope part, so that it results in a given general configuration and dimensions of the beverage preparation machine. On the other hand, there is an interest in compact construction forms of this type of machines.

There are known several documents in the prior art that disclose machine of the aforementioned type and presenting a compact construction (e.g. WO 2011/083103 A2, WO 2011/089210 A1). However, these documents do not disclose a sufficient level of compactness to make said machine substantially manageable with a single hand, similarly for example to current external memory disks. This objective mostly relates to providing a machine of reduced height and width.

A reduction of two relevant dimensions, for example the width and depth of the machine, is usually compromised by the remanding dimension, for example height, thereby making it difficult to grab and transport a machine with a single hand. In particular, it is noticed that the dimensions of the extraction device adapted for processing said portion package, the spatial distribution of the main functional means and the configuration of the machine structural parts contribute in particular manner to the general configuration and dimensions of the beverage preparation machine.

Moreover, the documents known for this type of machines do not disclose a solution whereby the water supply recipient is on full sight of the user, in all of its extension and all around. There is therefore a need to provide a beverage preparation machine comprising a set of functional means relevant for the preparation of aromatic beverages, such as for example espresso coffee, tea and similar, from a portion package, and that presents a particularly compact configuration that can be comfortably manually grabbed with a single hand.

The FR 653649 A1 also discloses a portable machine for the preparation of beverages, such as coffee, tea, whereby said machine comprises a box-like casing whose depictions might be construed to reproduce a reduced height to width ration.

### General description of the invention

The objective of the present invention is to provide a machine for preparing beverages adapted for extraction of an aromatic substance, including espresso type coffee, tea and similar, based upon the processing of respective individual portion packages, including in the form of rigid capsules and flexible pods, and that presents compact dimensions so as to provide a substantial manual portability, including using only one hand.

This objective is attained according to the present invention by means of a machine for preparing beverages according to claim 1.

In fact, the machine for preparing beverages according to the present invention presents a height of at most 17 cm, preferentially of at most 13 cm, and a width of at most 16 cm, preferentially of at most 12 cm, whereby the dimensional proportion between said maximum height and width is of at most 1,5:1, preferentially of at most 1,2:1. In particular, the machine for preparing beverages presents a machine envelope part that presents said maximum height and width.

According to a preferred embodiment, said machine envelope part is provided with a substantially horizontal and plane top face that occupies at least most part of the rear region and defines the width of the machine at least along the top side edges thereof. Moreover, it is preferred when it is provided in form of convex shell, particularly preferred in form of regular prism presenting five faces that define said maximum height and width of the machine. Moreover, it is preferred when said machine envelope part is provided so as to occupy at least 70% of the exterior envelope on sight of the machine, including at least part, preferentially most part, of the front face and of the top face of the machine.

According to another preferred embodiment, besides of said machine envelope part, the machine further presents a machine base part, whereby the latter defines, isolate or jointly with said machine envelope part, a height of at most 17 cm and a width of at most 16 cm, whereby the dimensional proportion between said maximum height and width is of at most 1,5:1, preferentially at most 1,2:1.

According to another preferred embodiment, the machine according to the present invention comprises only two machine structural parts, thereby substantially simplifying the production effort and respective assembly. In particular, said machine base part and machine envelope part are adapted so that the respective assembly provides said maximum height and width of the machine and said dimensional proportion of the dimension.

According to another preferred embodiment, said machine envelope part at least partially confines an extraction device adapted for interacting in proximity with the exterior envelope of said portion package, as well as fluid heating and compression means housed inside thereof.

According to another preferred embodiment, said extraction device presents a depth of at most 7 cm, a height and width of at most 6 cm, and a relation between maximum height and width of at most 1,5:1, preferentially at most 1,2:1.

According to another preferred embodiment, the beverage preparation machine provides different possibilities of connection to external supply sources of fluid, notably water, in particular so as to provide to a user full visibility of the water level, regardless of the usual observation angle.

In particular, said machine envelope part is provided with fluid supply connection means on said top face oriented upwards of the machine, so that a fluid supply recipient that is placed here results completely on sight in all its extension and all around, to a user of the machine.

According to another preferred embodiment, said fluid heating and compression means are provided in two devices arranged one on top of the other or one next to the other, preferentially along their greater extension.

According to another preferred embodiment, said machine base part is configured so as to serve of support to said fluid heating and compression means.

According to another preferred embodiment, said machine structural parts are adapted so as to provide structural support to said extraction device, fluid heating and compression means, energy supply means, fluid supply means and machine actuation interface means. In particular, said machine structural parts are adapted for assembly with the remanding along a single assembly direction.

One other objective of the present invention is to provide a system of machines for preparation of beverages, comprising at least two types of machines presenting a respectively different configuration and/or and providing a compact general configuration of easy portability, even if using a single hand only.

This objective is attained according to the present invention by means of a system of machines for preparing beverages according to claim 10.

In particular, said types of machines present a relation between respective maximum height and width of at most 1,5:1, and present a preferentially similar extraction device.

In the scope of the present invention, under "machine structural parts" it should be understood those construction elements that support the functional operation components (that is, those components that directly or indirectly participate in the process of preparation of a beverage), notably by means of fixed assembly connections, thereby ensuring a given spatial relation between them.

### Description of the figures

The present invention shall now be explained in greater detail based upon preferred embodiments and in the attached Figures.

The Figures show, in simplified schematic representations:
- Figure 1:: front and side views of a first embodiment of a beverage preparation machine (1) according to the invention;
- Figure 2:: front and side views of a second embodiment of a beverage preparation machine (1) according to the invention;
- Figure 3:: exploded perspective view of the embodiment according to Figure 1;
- Figure 4:: front and side views of a system including beverage preparation machines (1, 1') according to the present invention.

### Detailed description of preferred embodiments of the invention

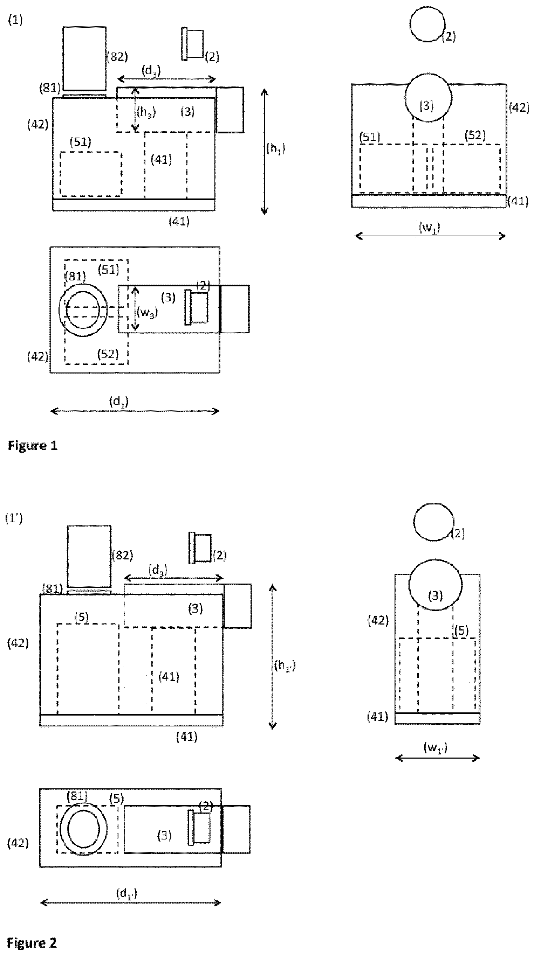

**Figure 1** represents a first embodiment of a beverage preparation machine (1) that presents an extraction device (3), adapted for processing a portion package (2), and several other functional components structurally supported and/or confined by machine structural parts (41, 42). Said machine structural parts comprise a machine base part (41) and a machine envelope part (42). Said functional components comprise fluid processing means (5), including fluid heating means (51) and fluid compression means (52), as well as energy supply means, including energy connection means and, eventually, energy storage means - known in prior art and therefore not represented -, machine actuation interface means - likewise known and therefore not represented - and fluid supply means, including connection means (81) to an external source and fluid supply means (82), such as for example a water supply reservoir.

According to a first inventive aspect, said beverage preparation machine (1) presents a maximum height (h₁) and width (w₁) of 17 cm, preferentially at most 13 cm.

According to a second inventive aspect, said beverage preparation machine (1) further presents a ration between said maximum height (h₁) and width (w₁) of at most 1,5:1, preferentially at most 1,2:1, that is, a substantially square front surface of said machine envelope part (42).

Besides of the smaller space requirements, these inventive aspects result particularly advantageous in terms of easy handling and transport of the beverage preparation machine (1) by a user thereof, notably with just one hand.

In this sense, Figure 1 shows and embodiment where said beverage preparation machine (1) a particularly reduced maximum construction height (h₁), with advantage in terms of easy handling with a single hand as a result of the reduction of height of a respective gravity center. Moreover, said machine (1) in this case presents a ration between maximum height (h₁) and width (w₁) of 0,8:1, that is, said machine envelope part (42) presents a front section with the form of a horizontally oriented rectangle.

According to another inventive aspect, said beverage preparation machine (1) presents an extraction device (3) with a compact construction, notably with a maximum height (h₃) of 8 cm and a maximum width (w₃) of 6 cm. Moreover, said extraction device (3) presents a ratio between maximum height (h₃) and width (w₃) of at most 1,5:1, preferentially at most 1:1.

As one can be observe from the drawings, according to another inventive aspect, said machine base part (41) and machine envelope part (42) are configured so that their assembly provides said maximum height (h₁) and width (w₁) and respective dimensional proportion. In this particular it is not considered the additional height of a fluid reservoir means (82), such as for example a water supply reservoir or a standard bottle of water, because this is provided removable so as to facilitate the handling of the beverage preparation machine (1).

According to another inventive aspect, the beverage preparation machine (1) presents a depth (d₁) of at most 20 cm, preferentially at most 18 cm, so that it results a particularly compact construction, eventually mostly extending along its depth (d₁).

In the case of a second preferred embodiment represented in **Figure 2****,** the beverage preparation machine (1') presents fluid processing means (5), provided in a single device with a more compact form than the aforementioned alternative of two distinct devices (51, 52), so that it is possible to further reduce the width (w_{1'}) of the machine (1'), even if with an increase of height (h_{1'}) and, eventually, of the depth (d₁) of the machine (1').

The beverage preparation machine (1') represented in Figure 2 thus presents a ratio between maximum height (h_{1'}) and width (w_{1'}) of 1,2:1, that is, in this case the machine envelope part (42) de presents a front section in the form of a vertically oriented.

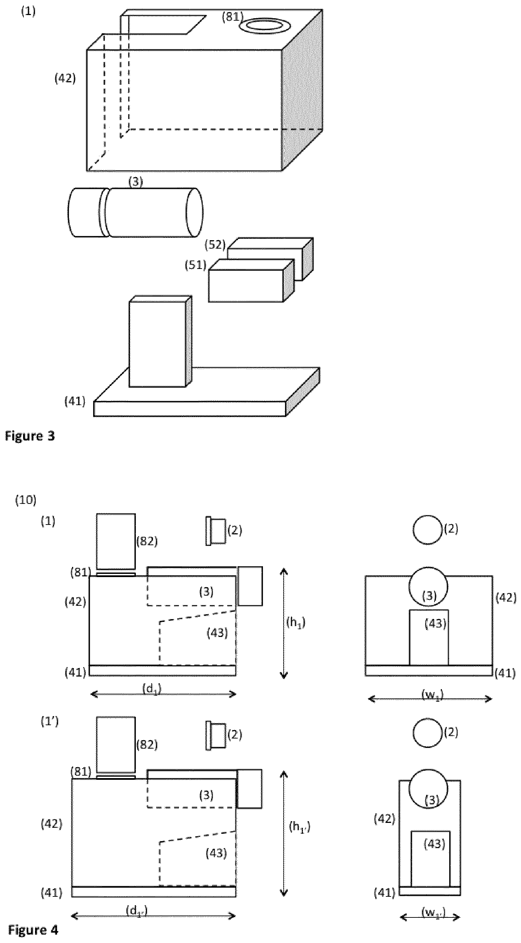

As one can observe from the exploded perspective represented in **Figure 3** of the embodiment represented in Figure 1, the machine base part (41) serves as support of assembly to said machine envelope part (42), as well as at least to said extraction device (3), preferentially also to other functional components of the machine.

As one can observe from the drawing, said machine envelope part (42) is provided in a single piece and occupies at least 70% of the exterior surface on sight of said beverage preparation machine (1), including at least part, preferentially most part, of the front face and of the top face of said machine (1). Moreover, said machine envelope part (42) is provided in form of convex shell, particularly preferentially in form substantially of a regular prism, so that it can be comfortably grabbed by hand.

According to a further inventive aspect, the beverage preparation machine (1) according to the present invention presents an extraction device (3) adapted for interacting with respective portion packages (2), whereby it presents a maximum depth (d₃) of at most 7 cm, a maximum height (h₃) and width (w₃) of at most 6 cm. These dimensions contribute in relevant manner to the compact configuration of the beverage preparation machine (1) according to the invention, without constraining the efficiency thereof.

**Figure 4** represents a system (10) comprising several, at least two, beverage preparation machines (1, 1') according to the invention.

The system (10) according to the present invention comprises at least two beverage preparation machines (1, 1') presenting a different configuration and/or dimensions, whereby said beverage preparation machines (1, 1') distinguish themselves in that they present a relation between maximum height (h₁) and width (w₁) of at most 1,5:1, preferentially at most 1,2:1.

Moreover, according to another inventive aspects, said machines (1, 1') present a similar extraction device (3), notably with a similar height (h₃, h_{3'}) and width (w₃, w_{3'}).

Moreover, in a system (10) according to the present invention, the beverage preparation machines (1, 1') present in each case a maximum height (h₁, h_{1'}) and width (w₁, w_{1'}) of at most 17 cm, preferentially at most 13 cm.

According to a preferred embodiment, at least one of the machine structural parts (41, 42), preferentially at least said machine base part (41), presents a similar format and/or dimensions in different beverage preparation machine (1, 1').

According to another preferred embodiment, the machines (1, 1') are provided with a machine base part (41) configured so as to receive a collection container (43) of operation residues that presents a cross section of form and dimension substantially similar to those of said portion packages (2) and preferentially configured so as to collect at least three of said portion packages (2) .

According to the invention, said beverage preparation machines (1, 1') present fluid supply means, including fluid connection means (81), configured so as to connect to a fluid reservoir (82), or to a external fluid supply source.

## Claims

1. Machine (1) for preparation of beverages from at least one edible substance inside of a portion package (2), comprising an extraction device (3) adapted for interacting in proximity with the exterior envelope of said portion package (2), a machine envelope part (42) and fluid processing means comprising fluid heating and compression means (5; 51, 52) housed inside of said machine envelope part (42), **characterized in that** it presents a height (h₁) and width (w₁) of at most 17 cm, preferentially at most 13 cm, whereby the dimensional proportion between the maximum height (h₁) and width (w₁) is of at most 1,5:1, preferentially of at most 1,2:1, whereby said machine envelope part (42) is provided with connection means (81) adapted for removable connection of an exterior fluid reservoir (82) or an exterior fluid supply source, arranged on top face of the machine envelope part (42), and said fluid processing means (5; 51, 52) are provided at least partially underneath said fluid reservoir connection means (81).

2. Machine (1) according to claim 1, **characterized in that** said machine envelope part (42) is provided in form of convex shell, preferentially in form of a regular prism comprising five faces, and thereby defining said maximum height (h₁) and width (d₁).

3. Machine (1) according to claim 1 or 2, **characterized in that** said machine envelope part (42) is provided with a substantially plane and horizontal top face that occupies at least most part of the rear region and defines the width of the machine at least along the top side edges thereof.

4. Machine (1) according to any one of previous claims 1 to 3, **characterized in that** said fluid reservoir connection means (81) are provided at a similar or bigger height than the height of the pressurized fluid injection into said extraction device (3).

5. Machine (1) according to any one of previous claims 1 to 4, **characterized in that** said extraction device (3) presents a depth of at most 7 cm, and a height (h₃) and width (w₃) of at most 6 cm, whereby the dimensional proportion between said maximum height (h₃) and width (w₃) is of at most 1,5:1, preferentially at most 1:1.

6. Machine (1) according to any one of previous claims 1 to 5, **characterized in that** it presents a depth (d₁) of at most 20 cm, preferentially at most 18 cm.

7. Machine (1) according to claim 6, **characterized in that** it further presents a machine base part (41), whereby said machine base part (41) and machine envelope part (42) are adapted so that they jointly provide said maximum height (h₁) and width (w₁) and said maximum dimensional proportion.

8. Machine (1) according to claims 6 and 7, **characterized in that** said machine base part (41) presents a first part developing horizontally and adapted as support base of said machine (1) and a second part developing substantially vertically and adapted as support at least of said extraction device (3).

9. Machine (1) according to any one of previous claims 6 to 8, **characterized in that** said machine base part (41) and machine envelope part (42) are adapted so as to receive a collection container part (43) that presents at least one collection zone presenting a cross section of substantially similar format and dimension to the cross section or to the front section of said portion packages (2), and preferentially configured so as to collect at least three of said portion packages (2).

10. System (10) comprising at least two different types of machines (1, 1') for preparing beverages according to any of claims 1 to 9, presenting a different configuration and/or dimensions, **characterized in that** said at least two types (1, 1') of machines present a relation between height (h₁) and width (w₁) of the machine (1) of at most 1,5:1, preferentially of at most 1,2:1, and a similar extraction device (3).

11. System (10) according to claim 10, **characterized in that** at least one of the machine structural parts (41, 42), preferentially at least the machine base part (41), presents a similar format and/or dimensions in said different types of machines (1, 1').

12. System (10) according to claim 10 or 11, **characterized in that** said different types (1, 1') of machines present a height (h₁) of at most 16 cm, preferentially at most 12 cm, a width (w₁) of at most 16 cm, preferentially of at most 12 cm, and a depth (d₁) of at most 20 cm, preferentially of at most 18 cm.

13. System (10) according to claims 10 to 12, **characterized in that** said different types (1, 1') of machine present a relation between height (h₁) and width (w₁) of at most 1,5:1, preferentially of at most 1,2:1.

## Patentansprüche

1. Maschine (1) zur Getränkezubereitung von mindestens einer essbaren Substanz innerhalb einer Dosierungspackung (2), umfassend ein Absauggerät (3) angepasst zum Zusammenwirken in der Nähe von der Außenhülle von genannter Dosierungspackung (2), ein Maschinenhüllenteil (42) und Flüssigkeitsabwicklungsmittel umfassend Flüssigkeitsheizungs- und Druckmittel (5; 51, 52) angeordnet innerhalb von genanntem Maschinenhüllenteil (42) **dadurch gekennzeichnet, dass** es eine Höhe (h₁) und eine Breite (w₁) von meistenteils 17 cm aufweist, vorzugsweise meistenteils 13 cm, wobei die dimensionale Proportion zwischen der Höchsthöhe (h₁) und der -breite (w₁) meistenteils 1,5:1 ist, vorzugsweise meistenteils 1,2:1, wobei genanntes Maschinenhüllenteil (42) mit Verbindungsmittel (81) angepasst zur beweglichen Verbindung von einem Außenflüssigkeitsbehälter (82) oder von einer Außenflüssigkeitsversorgungsquelle versehen ist, angeordnet auf der Oberseite vom Maschinenhüllenteil (42), und genannte Flüssigkeitsabwicklungsmittel (5; 51, 52) mindestens teils unterhalb genannten Flüssigkeitsbehälterverbindungsmittel (81) angeordnet sind.

2. Maschine (1) gemäß Anspruch 1 **dadurch gekennzeichnet, dass** genanntes Maschinenhüllenteil (42) in Form einer Bogenschale versehen ist, vorzugsweise eines regelmäßigen Prismas umfassend fünf Seiten, und dadurch festlegend genannte Höchsthöhe (h₁) und -breite (w₁).

3. Maschine (1) gemäß Anspruch 1 oder 2 **dadurch gekennzeichnet, dass** genanntes Maschinenhüllenteil (42) mit einer wesentlich ebenen und waagerechten Oberseite versehen ist, die mindestens meistenteils des hinteren Bereiches besetzt und die Breite der Maschine mindestens entlang der Oberseitenkanten festlegt.

4. Maschine (1) gemäß einer der vorigen Ansprüche 1 bis 3 **dadurch gekennzeichnet, dass** genannte Flüssigkeitsbehälterverbindungsmittel (81) bei ähnlicher oder höheren Höhe der Druckflüssigkeitseinspritzung in genanntes Absauggerät (3) versehen sind.

5. Maschine (1) gemäß einer der vorigen Ansprüche 1 bis 4 **dadurch gekennzeichnet, dass** genanntes Absauggerät (3) eine Tiefe von meistens 7 cm und eine Höhe (h₃) und eine Breite (w₃) von meistens 6 cm aufweist, wobei die dimensionale Proportion zwischen genannter Höchsthöhe (h₃) und -breite (w₃) von meistenteils 1,5:1, vorzugsweise meistenteils 1:1 ist.

6. Maschine (1) gemäß einer der vorigen Ansprüche 1 bis 5 **dadurch gekennzeichnet, dass** sie eine Tiefe (d₁) von meistenteils 20 cm, vorzugsweise meistenteils 18 cm, aufweist.

7. Maschine (1) gemäß Anspruch 6 **dadurch gekennzeichnet, dass** sie weiterhin ein Maschinengrundteil (41) aufweist, wobei genanntes Maschinengrundteil (41) und Maschinenhüllenteil (42) so angepasst sind, um gemeinsam genannte Höchsthöhe (h₁) und - breite (w₁) und genannte höchstdimensionale Proportion zu ermöglichen.

8. Maschine (1) gemäß Ansprüche 6 und 7 **dadurch gekennzeichnet**, das genanntes Maschinengrundteil (41) ein erstes Teil aufweist, das sich waagerecht entwickelt und angepasst als Grundstütze von genannter Maschine (1), und ein zweites Teil, das sich wesentlich senkrecht entwickelt und angepasst als Stütze mindestens von genanntem Absauggerät (3).

9. Maschine (1) gemäß einer der vorigen Ansprüche 6 bis 8 **dadurch gekennzeichnet, dass** genanntes Maschinengrundteil (41) und Maschinenhüllenteil (42) so angepasst sind, um ein Sammelbehälterteil (43) zu empfangen, das mindestens ein Sammelbereich aufweist aufweisend einen Querschnitt von wesentlich ähnlichem Format und Dimension zum Querschnitt oder zur Vorderseite von genannten Dosierungspackungen (2), und vorzugsweise so gestaltet, um mindestens drei von genannten Dosierungspackungen (2) zu sammeln.

10. System (10) umfassend mindestens zwei Maschinentypen (1, 1') zur Getränkezubereitung gemäß einer der Ansprüche 1 bis 9 aufweisend eine unterschiedliche Konfiguration und/oder Dimensionen **dadurch gekennzeichnet, dass** mindestens zwei genannte Maschinentypen (1, 1') eine Verbindung zwischen Höhe (h₁) und Breite (w₁) von der Maschine (1) von meistenteils 1,5:1 aufweisen, vorzugsweise von meistenteils 1,2:1, und einem ähnlichen Absauggerät (3).

11. System (10) gemäß Anspruch 10 **dadurch gekennzeichnet, dass** mindestens ein der Maschinenbauiteile (41, 42), vorzugsweise mindestens das Maschinengrundteil (41), eine ähnliche Form und/oder Dimension in genannte unterschiedlichen Maschinentypen (1, 1') aufweist.

12. System (10) gemäß Anspruch 10 oder 11 **dadurch gekennzeichnet, dass** genannte unterschiedliche Maschinentypen (1, 1') eine Höhe (h₁) von meistenteils 16 cm, vorzugsweise eistenteils 12 cm, eine Breite (w₁) von meistenteils 16 cm, vorzugsweise eistenteils 12 cm, und eine Tiefe (d₁) von meistenteils 20 cm, vorzugsweise von meistenteils 18 cm, aufweisen.

13. System (10) gemäß Ansprüche 10 bis 12 **dadurch gekennzeichnet, dass** genannte unterschiedliche Maschinentypen (1, 1') eine Verbindung zwischen Höhe (h₁) und Breite (w₁) von meistenteils 1,5:1, vorzugsweise von meistenteils 1,2:1, aufweisen.

## Revendications

1. Machine(1) pour la préparation de breuvages d'au moins une substance comestible à l'intérieur d'un emballage-portion (2), comprenant un dispositif d'extraction (3) adapté à l'interaction à proximité de l'enveloppe extérieure dudit emballage-portion (2), une partie de l'enveloppe de la machine (42) et des moyens de traitements du fluide comprenant des moyens de compression et de réchauffage du fluide (5; 51, 52), logés à l'intérieur de ladite partie de l'enveloppe de la machine (42), **caractérisée par le fait qu'**elle présente une hauteur (h₁) et une largeur (w₁) de 17 cm, au maximum, de préférence 13 cm, au maximum, où la proportion dimensionnelle entre la hauteur maximale (h₁) et la largeur (w₁) est au maximum, de 1,5:1, de préférence de 1,2:1, au maximum, où ladite partie de l'enveloppe de la machine (42) est fournie avec des moyens de connexion (81) adaptés à une connexion amovible d'un réservoir de fluide extérieur (82) ou d'une source d'approvisionnement de fluide extérieur, arrangés sur la face supérieur de la partie de l'enveloppe de la machine (42) et lesdits moyens de traitement du fluide (5; 51, 52) sont fournis au moins partiellement en dessous des dits moyens de connexion du réservoir du fluide (81).

2. Machine (1) selon la revendication 1, **caractérisée par le fait que** ladite partie de l'enveloppe de la machine (42) est fournie sous forme de coque convexe, de préférence sous forme d'un prisme régulier comprenant cinq faces, et définissant donc lesdites hauteur (h₁) et largeur (d₁).

3. Machine (1) selon la revendication 1 ou 2, **caractérisée par le fait que** ladite partie de l'enveloppe de la machine (42) est fournie avec une face supérieure substantiellement plate et horizontale occupant au moins la plupart de la région arrière et définit la largeur de la machine au moins le long des bords de la partie supérieure de celle-ci.

4. Machine (1) selon une quelconque revendication entre 1 et 3 précédentes, **caractérisée par le fait que** lesdits moyens de connexion du réservoir du fluide (81) sont fournis à une hauteur similaire ou supérieur à la hauteur de l'injection du fluide pressurisé dans ledit dispositif d'extraction (3).

5. Machine (1) selon une quelconque revendication précédente entre 1 et 4, **caractérisée par le fait que** ledit dispositif d'extraction (3) présente une profondeur de 7 cm, au maximum, et une hauteur (h₃) ainsi que d'une largeur (w₃) de de 6 cm, au maximum, où la proportion dimensionnelle entre lesdites hauteur maximale (h₃) et largeur (w₃) est de 1,5:1, au maximum, de préférence de 1:1, au maximum.

6. Machine (1) selon une quelconque revendication précédente entre 1 et 5, **caractérisée par le fait qu'**elle présente une profondeur (d₁) de 20 cm, au maximum, de préférence de 18 cm, au maximum.

7. Machine (1) selon la revendication 6, **caractérisée par le fait qu'**elle présente en outre, une partie de base de la machine (41), où ladite partie de base de la machine (41) et la partie de l'enveloppe de machine (42) sont adaptées afin qu'elles fournissent conjointement une hauteur (h₁) et largeur (w₁) maximales et ladite proportion dimensionnelle maximale.

8. Machine (1) selon les revendications 6 et 7, **caractérisée par le fait que** la partie de base de la machine (41) présente une première partie se développant horizontalement et adaptée comme base de support de ladite machine (1) et une seconde partie se développant substantiellement verticalement et adaptée comme support au moins dudit dispositif d'extraction (3).

9. Machine (1) selon une quelconque revendication précédente entre 6 et 8, **caractérisée par le fait que** la partie de base de la machine (41) et la partie de l'enveloppe de la machine (42) sont adaptées afin de recevoir la partie du conteneur de collecte (43) qui présente au moins une zone de collecte présentant une section en croix de format et dimension substantiellement similaires à la section en croix ou à la section avant desdits emballages-portion (2) et configurés afin de recueillir au moins trois des dits emballages-portion (2).

10. Système (10) comprenant au moins deux différents types de machines (1, 1') pour la préparation de breuvages, selon une quelconque revendication entre 1 et 9, présentant une configuration et/ou des dimensions différentes, **caractérisé par le fait qu'**au moins deux types (1, 1') de machines présentent une relation entre la hauteur (h₁) et la largeur (w₁) de la machine (1) de 1,5:1, au maximum, de préférence 1,2:1, au maximum et un dispositif d'extraction similaire (3) .

11. Système (10) selon la revendication 10, **caractérisée par le fait qu'**au moins une des parties structurelles de la machine (41, 42), de préférence au moins la partie de base de la machine (41) présente un format et /ou des dimensions similaires dans lesdits différents types de machines (1, 1').

12. Système (10) selon la revendication 10 ou 11, **caractérisée par le fait que** lesdits différents types (1, 1') de machines présentent une hauteur (h₁) de 16 cm, au maximum, de préférence 12 cm, au maximum, une largeur (w₁) de 16 cm au maximum, de préférence 12 cm, au maximum et une profondeur (d₁) de 20 cm au maximum, de préférence 18 cm, au maximum.

13. Système (10) selon les revendications entre 10 et 12, **caractérisé par le fait que** lesdits différents types (1, 1') de machine présentent une relation entre la hauteur (h₁) et la largeur (w₁) de 1,5:1, au maximum, de préférence 1,2:1, au maximum.
